# EUROPÄISCHE PATENTSCHRIFT

(11) **EP 3 409 531 B1**
(45) Veröffentlichungstag und Bekanntmachung des Hinweises auf die Patenterteilung: **25.12.2019**
(21) Anmeldenummer: 18171284.5
(22) Anmeldetag: 08.05.2018
(51) Int. Cl.: B60N 2/07, B60N 2/16, F16C 13/00, F16C 29/04

(54) **ROLLENFÜHRUNG**
ROLLER GUIDE
GUIDAGE À ROULEAUX

(30) Priorität: 23.05.2017 DE 102017111206
(43) Veröffentlichungstag der Anmeldung: 05.12.2018
(73) Patentinhaber: Grammer AG, 92224 Amberg (DE)
(72) Erfinder: Lorey, Konstantin, 92546 Schmidgaden (DE); Delling, Gerhard, 92546 Schmidgaden (DE)
(74) Vertreter: Hannke, Christian

(56) Entgegenhaltungen:
- EP-A2- 1 623 867
- DE-A1-102006 059 088
- DE-A1-102012 004 784
- DE-B3-102006 021 886

## Beschreibung

Die Erfindung betrifft eine Rollenführung mit zumindest einer Führungsschiene, welche zumindest einen ersten und einen zweiten flächigen Bereich aufweist, und mit einer ersten und einer zweiten Laufrolle, welche jeweils mit der Führungsschiene in Kontakt stehen und daran abrollen, wobei die erste und die zweite Laufrolle um eine gemeinsame Drehachse drehbar gelagert und um die Drehachse rotationssymmetrisch ausgebildet sind und ein Radius der ersten Laufrolle kleiner ist als ein Radius der zweiten Laufrolle.

Insbesondere betrifft die Erfindung ebenso einen Fahrzeugsitz mit einer Rollenführung.

Es ist aus EP 1 623 867 B1 eine Rollenführung für einen längsverstellbaren Fahrzeugsitz bekannt, wobei zumindest eine der gezeigten Laufrollen kegel- oder kegelstumpfförmig ausgebildet ist. Diese Anmeldung hat unter anderem die Nachteile, dass bei einer Seitenbelastung eine größere Radialkraft auf die Kegelrolle wirkt. Weiter entsteht ein merklicher Schlupf an der entsprechenden Kegelfläche der Kegelrolle aufgrund von unterschiedlichen Abrollradien der Kegelrolle.

Eine Folge hieraus ist eine erhöhte Reibung und ein erhöhter Verschleiß, was zu einem schlechteren Verhalten im Betrieb führt.

Es ist demzufolge Aufgabe der vorliegenden Erfindung, die Nachteile des Standes der Technik zu überkommen und eine neuartige Rollenführung, insbesondere eine Rollenführung für Fahrzeugsitze, zu präsentieren.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, eine Rollenführung bereitzustellen mit zumindest einer Führungsschiene, welche zumindest einen ersten und einen zweiten flächigen Bereich aufweist, und mit einer ersten und einer zweiten Laufrolle, welche jeweils mit der Führungsschiene in Kontakt stehen und daran abrollen, wobei die erste und die zweite Laufrolle um eine gemeinsame Drehachse drehbar gelagert und um die Drehachse rotationssymmetrisch ausgebildet sind und ein Abstand der ersten Laufrolle zu der Drehachse kleiner ist als ein Abstand der zweiten Laufrolle zu der Drehachse, wobei die erste Laufrolle einen ersten kreissegmentförmigen Oberflächenabrollbereich mit einem ersten Radius und die zweite Laufrolle einen zweiten kreissegmentförmigen Oberflächenabrollbereich mit einem zweiten Radius aufweist und ein Mittelpunkt des ersten Oberflächenabrollbereichs und ein Mittelpunkt des zweiten Oberflächenabrollbereichs auf der Drehachse angeordnet sind.

Ein Abstand zu der Drehachse ist vorzugsweise als ein Abstand in radialer Richtung der Drehachse zu verstehen, insbesondere den maximalen Abstand in radialer Richtung.

Insbesondere stehen die erste Laufrolle mit dem ersten flächigen Bereich und die zweite Laufrolle mit dem zweiten flächigen Bereich in Kontakt.

Unter einem Abrollen ist natürlich eine Rollbewegung der Laufrollen zu verstehen. Das heißt, bei einer linearen Bewegung der Laufrollen in der Führungsschiene wird eine Rollbewegung der Laufrollen um die Drehachse erzeugt. Vorzugsweise ist die Führungsschiene mit einem Sitzoberteil und/oder einem Sitzunterteil verbunden, wobei hingegen die Laufrollen beispielsweise mit einem Scherenarm eines Scherengestells verbunden sind und bei einer Auslenkung des Scherengestells innerhalb der Führungsschiene abrollen.

Erfindungsgemäß weist die erste Laufrolle einen ersten kreissegmentförmigen Oberflächenabrollbereich und die zweite Laufrolle einen zweiten kreissegmentförmigen Oberflächenabrollbereich auf. Insbesondere durch die zumindest teilweise kreissegmentförmige Ausgestaltung der Laufrollen können die Nachteile des Standes der Technik behoben werden. Genauer gesagt, weisen die Laufrollen eine kugelförmige bzw. sphärische Laufoberfläche auf. In einem Querschnitt der Laufrollen ist diese Oberfläche als ein kreissegmentförmiger Bereich zu erkennen bzw. dargestellt.

Die Erstreckungsrichtung der Drehachse ist vorzugsweise senkrecht zu der Richtung der Rollbewegung.

Gemäß einer besonders bevorzugten Ausführungsform steht die erste Laufrolle mittels des ersten kreisförmigen Oberflächenabrollbereichs mit dem ersten flächigen Bereich über einen ersten Kontaktpunkt und die zweite Laufrolle des zweiten kreissegmentförmigen Oberflächenabrollbereichs mit dem zweiten flächigen Bereich über einen zweiten Kontaktpunkt in Kontakt.

Natürlich ist es hierbei denkbar, dass mehrere Kontaktpunkte vorgesehen sind. Durch die Verringerung der Kontaktpunkte ist es im Allgemeinen möglich, die Reibung der Laufrollen mit der Führungsschiene zu minimieren. Gemäß einer weiteren bevorzugten Ausführungsform jedoch stehen die erste Laufrolle ausschließlich mittels des ersten Kontaktpunkts mit dem ersten flächigen Bereich und die zweite Rolle ausschließlich mittels des zweiten Kontaktpunkts mit dem flächigen Bereich in Kontakt. Hierdurch ist es möglich, die Reibung noch weiter zu minimieren.

Vorzugsweise sind der erste Kontaktpunkt in einem oberen Bereich und der zweite Kontaktpunkt in einem unteren Bereich der Führungsschiene angeordnet. Der erste Kontaktpunkt übernimmt hierbei die Aufnahme von Kräften, die in Höhenrichtung oder in Richtung der Drehachse auftreten, wohingegen der zweite Kontaktpunkt eine Klemmung der ersten Laufrolle übernimmt, da erfindungsgemäß der radiale Abstand der ersten Laufrolle kleiner ist als der radiale Abstand der zweiten Laufrolle zu der Drehachse. Insbesondere Kräfte, welche bei Lastwechsel oder dergleichen auftreten, werden von der ersten Laufrolle aufgenommen.

Gemäß einer weiteren bevorzugten Ausführungsform sind der erste kreissegmentförmige Oberflächenabrollbereich und der zweite kreissegmentförmige Oberflächenabrollbereich in einer gemeinsamen Ebene angeordnet, welche die Drehachse umfasst.

Weiter vorteilhaft sind die jeweiligen Kontaktpunkte ebenfalls Punkte der gemeinsamen Ebene.

Besonders vorteilhaft erstreckt sich die gemeinsame Ebene in Richtung der Drehachse und in Höhenrichtung der Rollenführung, insbesondere der Führungsschiene.

Es ist hierbei natürlich auch entscheidend, welche Form bzw. welche Ausgestaltung die Führungsschiene, insbesondere die flächigen Bereich, aufweist. Gemäß einer bevorzugten Ausführungsform weist der erste flächige Bereich einen ersten kreissegmentförmigen Abschnitt auf mit einem Radius, welcher größer ist als der erste Radius des ersten kreissegmentförmigen Oberflächenabrollbereichs, oder dass der erste flächige Bereich einen ersten ebenen Abschnitt aufweist.

Vorzugsweise berühren sich die Kreisbögen des ersten kreissegmentförmigen Abschnitts und des ersten kreissegmentförmigen Oberflächenabrollbereichs in genau einem Punkt, nämlich den ersten Kontaktpunkt. Falls der erste flächige Bereich einen ebenen Abschnitt aufweist, so gilt entsprechend das gleiche, dass sich der erste ebene Abschnitt und der erste kreissegmentförmige Oberflächenabrollbereich in genau dem ersten Kontaktpunkt berühren.

Gemäß einer weiteren Ausführungsform weist der zweite flächige Bereich einen zweiten ebenen Abschnitt auf. Auch hier ist es denkbar, dass der zweite ebene Abschnitt mit der zweiten Laufrolle lediglich mittels des zweiten Kontaktpunkts in Kontakt steht.

Gemäß einer weiteren Ausführungsform weist die Rollenführung eine um die Drehachse drehbare Welle auf, auf welcher die erste Laufrolle und die zweite Laufrolle angeordnet sind, wobei die Welle an einem ersten Ende zumindest ein vorgespanntes Federelement aufweist und wobei das Federelement mit der ersten Laufrolle zumindest in Wirkkontakt steht.

Hierdurch ist es insbesondere möglich, dass Kräfte, die durch Bewegungen der Welle in Richtung der Längserstreckung der Drehachse entstehen, besser aufgenommen werden können, so dass die Laufrollen nicht beschädigt werden.

Bevorzugt besteht das vorgespannte Federelement zumindest teilweise aus einem Elastomer, besonders bevorzugt aus Cellasto.

Alternativ hierzu ist es denkbar, dass das vorgespannte Federelement ein Kugelelement und eine vorgespannte Druckfeder aufweist, wobei das Kugelelement mittels der Druckfeder vorgespannt ist. Vorzugsweise steht das Kugelelement sowohl mit der Druckfeder einerseits und mit der ersten Laufrolle andererseits in Kontakt.

Gemäß einer weiteren bevorzugten Ausführungsform ist es möglich, die Laufeigenschaften der Laufrollen zu verbessern. Gemäß dieser Ausführungsform umfasst die Lagerung der ersten Laufrolle und der zweiten Laufrolle jeweils eines ausgewählt aus einer Gruppe umfassend ein Nadellager, ein Kugellager oder eine Kombination daraus.

Noch vorteilhafter können gemäß einer weiteren Ausführungsform die auf die Rollenführung einwirkenden Kräfte aufgenommen und verteilt werden, wenn die erste Laufrolle einen dritten kreissegmentförmigen Oberflächenabrollbereich mit einem dritten Mittelpunkt aufweist, welcher auf der Drehachse angeordnet ist, wobei die erste Laufrolle zusätzlich mittels des dritten kreissegmentförmigen Oberflächenbereichs mit einem dritten flächigen Bereich der Führungsschiene über einen dritten Kontaktpunkt in Kontakt steht.

Vorzugsweise kann der dritte flächige Bereich, analog zu dem ersten flächigen Bereich, einen dritten kreissegmentförmigen Abschnitt aufweisen mit einem dritten Radius, welcher größer ist als der ein Radius des dritten kreissegmentförmigen Oberflächenabrollbereichs, oder wobei der dritte flächige Bereich einen dritten ebenen Abschnitt aufweist.

Dadurch, dass die erste Laufrolle über den ersten und den dritten Kontaktpunkt mit der Führungsschiene in Kontakt steht, kann nun durch den ersten Kontaktpunkt die Kraft in Richtung der Drehachse aufgenommen werden, wohingegen durch den dritten Kontaktpunkt die Kraft in Höhenrichtung, also senkrecht zu der Drehachse, aufgenommen werden können. Die Funktion des zweiten Kontaktpunktes ändert sich nicht.

Gemäß einer weiteren bevorzugten Ausführungsform weist der erste Kontaktpunkt und der dritte Kontaktpunkt den gleichen radialen Abstand zu der Drehachse auf.

Hierdurch haben der erste und der dritte Kontaktpunkt die gleiche lineare Geschwindigkeit, wodurch auch der Schlupf der ersten Laufrolle verringert bzw. sogar vermieden werden kann.

Besonders vorteilhaft stehen die erste Laufrolle ausschließlich mit dem ersten flächigen Bereich und dem dritten flächigen Bereich und die zweite Laufrolle ausschließlich mit dem zweiten flächigen Bereich in Kontakt.

Hierdurch kann die Reibung ebenfalls bis auf ein gewisses Minimum verringert werden.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: eine Rollenführung gemäß einer ersten Ausführungsform;
- Fig. 2: eine Rollenführung gemäß einer weiteren Ausführungsform;
- Fig. 3: eine Rollenführung gemäß einer weiteren Ausführungsform;
- Fig. 4: eine Rollenführung gemäß einer weiteren Ausführungsform;
- Fig. 5: eine Rollenführung gemäß einer weiteren Ausführungsform;
- Fig. 6: ein Sitzunterbau mit einer Rollenführung.

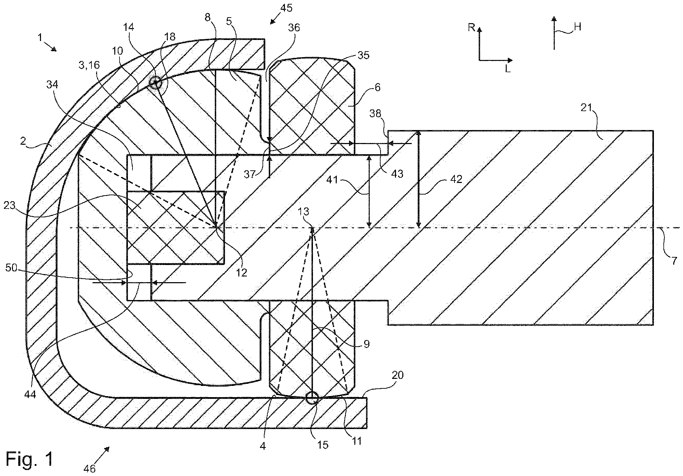

Die in der Figur 1 gezeigte Rollenführung 1 weist erfindungsgemäß eine Führungsschiene 2 mit einem ersten flächigen Bereich 3 und einem zweiten flächigen Bereich 4 auf. Weiter sind eine erste Laufrolle 5 sowie eine zweite Laufrolle 6 zu erkennen, welche rotationssymmetrisch und um eine gemeinsame Drehachse 7 rotatorisch gelagert angeordnet sind. Vorzugsweise sind die Laufrollen 5, 6 auf einer Welle 21 angeordnet, welche sich in Erstreckungsrichtung L der Drehachse 7 erstreckt.

Weiter ist der maximale radiale Abstand 8 der ersten Laufrolle 5 kleiner als der maximale radiale Abstand 9 der zweiten Laufrolle. Radial bezieht sich im Allgemeinen in radialer Richtung R der Drehachse 7 gesehen.

Zusätzlich weist die erste Laufrolle 5 einen ersten kreissegmentförmigen Oberflächenabrollbereich 10 mit einem ersten Mittelpunkt 12 und die zweite Laufrolle 6 einen zweiten kreissegmentförmigen Oberflächenabrollbereich 11 mit einem zweiten Mittelpunkt 13 auf, wobei der erste und der zweite Mittelpunkt 11, 12 auf der Drehachse 7 angeordnet sind.

Genauer weisen die erste Laufrolle 5 und die zweite Laufrolle 6 einen kugeloberflächigen Bereich 10 auf, welcher in dem dargestellten Querschnitt als ein kreissegmentförmiger Oberflächenabrollbereich 10, 11 dargestellt ist.

Gemäß Figur 1 entspricht hierbei der maximale Abstand 8 dem Radius des ersten kreissegmentförmigen Oberflächenabrollbereichs 10 und der maximale Abstand 9 dem Radius des zweiten kreissegmentförmigen Oberflächenabrollbereichs 11.

Weiter erfindungsgemäß steht die erste Laufrolle 5 mit dem ersten flächigen Bereich 3 der Führungsschiene mittels eines ersten Kontaktpunkts 14 in Kontakt. Insbesondere weist der erste flächige Bereich 3 einen ersten kreissegmentförmigen Abschnitt 16 auf, welcher mit dem ersten Oberflächenabrollbereich 10 mittels des ersten Kontaktpunkts 14 in Kontakt steht. Der Radius des ersten kreissegmentförmigen Abschnitts 16 ist hierbei größer als der erste Radius des ersten Oberflächenabrollbereichs 10. Insbesondere wird angemerkt, dass der Mittelpunkt des ersten kreissegmentförmigen Abschnitts 16 nicht auf der Drehachse 7 angeordnet ist.

Die Kreissegmentform des ersten kreissegmentförmigen Oberflächenabrollbereichs 10 und des zweiten kreissegmentförmigen Oberflächenabrollbereichs 11 ist durch den entsprechenden Kreisbogen sowie mittels gestrichelter Linien dargestellt.

In diesem Ausführungsbeispiel weist der erste flächige Bereich 3 einen ersten kreissegmentförmigen Abschnitt 16 auf, welcher einen Radius aufweist, welcher größer ist als ein erster Radius des ersten Oberflächenabrollbereichs 10.

Darüber hinaus ist der Figur 1 ein Federelement 23 zu erkennen, welches vorliegend an einem ersten Ende 22 der Welle 21 angeordnet ist und mit der Welle 21 als auch mit der ersten Laufrolle 5 in Kontakt steht. Bei Bewegungen der Welle 21 in Richtung der Erstreckungsrichtung L können die auftretenden Kräfte von dem Federelement 23 aufgenommen werden. Vorteilhaft ist das Federelement 23 vorgespannt und besteht zumindest teilweise aus einem Elastomer, besonders bevorzugt aus Cellasto. Insbesondere steht lediglich das Federelement 23 mit einer inneren Stirnfläche 50 der ersten Laufrolle 5 in Kontakt, so dass hierdurch auftretende Reibungskräfte minimiert werden können.

Weiter können die auftretenden Kräfte der Bewegung der Welle 21 entlang der Richtung L noch besser von dem Federelement 23 aufgenommen werden, wenn das zwischen der ersten Laufrolle 5 und dem ersten Ende 22 der Welle 21 ein Freiraum 34 zumindest teilweise um das Federelement 23 herum vorgesehen ist. Dies erlaubt eine Relativbewegung der Welle 21 zu der ersten Laufrolle 5 und der Federweg des Federelements 23 ist hierdurch erhöht.

Des Weiteren stehen die erste Laufrolle 5 und die zweite Laufrolle 6 über eine Kontaktfläche 35 in Kontakt, welche in radialer Richtung R gesehen eine vorbestimmte Ausdehnung 37 aufweist. Besonders bevorzugt ist die Ausdehnung 37 derart ausgebildet, dass weiter zwischen der ersten Laufrolle 5 und der zweiten Laufrolle 6 ein Entlastungsbereich 36 angeordnet ist, so dass insbesondere bei Bewegung der Welle 21 in Richtung L ein gewisses Spiel zwischen der ersten Laufrolle 5 und der zweiten Laufrolle 6 vorhanden ist, da die zweite Laufrolle 6 den zweiten Kontaktpunkt 15 gegenüberliegend dem ersten Kontaktpunkt 14 aufweist. Gegenüberliegend heißt vorliegende, dass der zweite Kontaktpunkt 15 in Bezug auf die Drehachse 7 auf der anderen Seite der Drehachse 7 liegt als der erste Kontaktpunkt 14.

Es ist natürlich auch denkbar, dass die erste Laufrolle 5 und die zweite Laufrolle 6 sich nicht berühren, also keine Kontaktfläche ausbilden.

Die zweite Laufrolle 6 weist einen zweiten kreissegmentförmigen Oberflächenabrollbereich 11 auf, welcher mit einem zweiten flächigen Bereich 4 der Führungsschiene 2 mittels eines zweiten Kontaktpunkts 15 in Kontakt steht. Insbesondere weist der zweite flächige Bereich 4 einen zweiten ebenen Abschnitt 20 auf, wobei ein Normalenvektor (hier nicht gezeigt) des zweiten ebenen Abschnitts 20 in radialer Richtung R verläuft und der Abstand des zweiten ebenen Abschnitts 20 dem Radius 9 des zweiten Oberflächenabrollbereichs 11 entspricht.

Der erste flächige Bereich 3 ist ebenso auf der anderen Seite in Bezug auf die Drehachse 7 als der zweite flächige Bereich 4 angeordnet. Hieraus folgt, da erfindungsgemäß der maximale Abstand der ersten Laufrolle 5 kleiner ist als der maximale Abstand der zweiten Laufrolle 6 in radialer Richtung R, die erste Laufrolle 5 nur mit dem ersten flächigen Bereich 3 und die zweite Laufrolle 6 nur mit dem zweiten flächigen Bereich 4 in Kontakt steht.

Die Welle 21 weist vorzugsweise weiter einen vorderen Bereich 39 und einen hinteren Bereich 40 auf, welche mittels eines Übergangsbereichs 38 miteinander verbunden sind. Bevorzugt sind die erste Laufrolle 5 und die zweite Laufrolle 6 mit dem vorderen Bereich 39 verbunden und gegenüber diesem gelagert, wobei der vordere Bereich 39 einen vorderen Abstand 41 von der Drehachse 7 aufweist, der kleiner ist als ein hinterer Abstand 42 von der Drehachse, jeweils in radialer Richtung R. In Erstreckungsrichtung L gesehen ist die zweite Laufrolle 6 in einem Längsabstand 43 von dem Übergangsbereich 38 angeordnet. Vorzugsweise entspricht die Länge des Längsabstands 43 einer Länge einer Längserstreckung 44 des Freiraums 34, wodurch der Übergangsbereich 38 bei einer Relativbewegung der Welle 21 zu der ersten Laufrolle 5 als ein Endanschlag dient. Es ist aber auch denkbar, dass die Länge des Längsabstandes 43 größer ist als die Länge der Längserstreckung 44.

Bevorzugt ist die Führungsschiene 2 im Wesentlichen U-förmig ausgebildet, wobei ein Schenkel des U weniger lang ausgebildet ist als der andere Schenkel des U. Insbesondere weist der längere Schenkel 46 den zweiten flächigen Bereich 4 und der kürzere Schenkel 45 den ersten flächigen Bereich 3. Insbesondere steht die zweite Laufrolle 6 nur mit dem längeren Schenkel 46 in Kontakt und nicht mit dem kürzeren Schenkel 45. Bezüglich der ersten Laufrolle 5 ist die Situation umgekehrt, diese steht nur mit dem kürzeren Schenkel 45 und nicht mit dem längeren Schenkel 46 in Kontakt.

Es ist jedoch auch denkbar, dass die Schenkel 45, 46 gleich lang ausgebildet sind, jedoch der Schenkel 45 derart geformt ist, um nicht mit der zweiten Laufrolle 6 in Kontakt zu stehen.

Der erste Kontaktpunkt 14 nimmt insbesondere Kräfte auf in Richtung L und in Richtung R, insbesondere in Höhenrichtung H der Führungsschiene 2, wohingegen der zweite Kontaktpunkt 15 insbesondere eine Klemmung der ersten Laufrolle 5 aufgrund der relativen Bemaßungen zueinander und nimmt ebenso Kräfte in Richtung H auf, insbesondere bei Lastwechseln oder dergleichen.

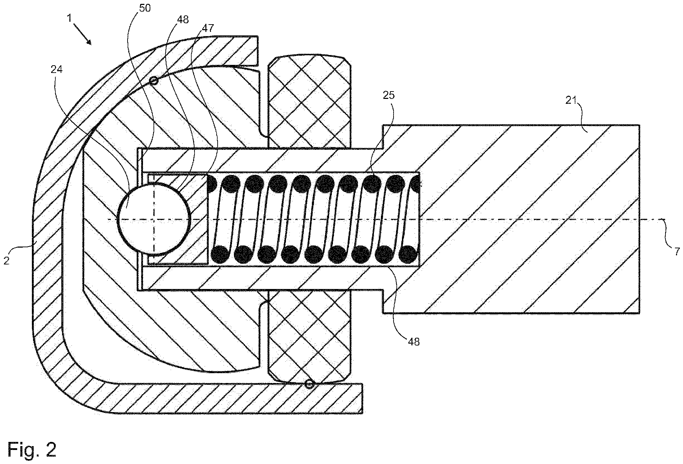

Figur 2 zeigt eine weitere Ausführungsform, wobei das Federelement 23 in der Figur 2 anders ausgestaltet ist als in der Figur 1 dargestellt. Ansonsten sind Figur 1 und Figur 2 identisch ausgebildet. Zur Übersichtlichkeit wurden an einigen Stellen die Bezugszeichen weggelassen, da sich diese mit der Figur 1 decken.

Das Federelement 23 umfasst gemäß der Ausführungsform der Figur 2 ein Kugelelement 24 sowie eine vorgespannte Druckfeder 25, die einerseits mit der Welle 21 als auch dem Kugelelement 24 in Kontakt steht. Vorzugsweise ist das Kugelelement 24 mit einer Kugelhalterung 48 verbunden, welche eine Ausnehmung 48 aufweist, die derart ausgebildet ist, das Kugelelement 24 aufnehmen zu können. Die Druckfeder 25 sowie die Kugelhalterung 48 sind linear verlagerbar in einer Bohrung 49, welche sich ausgehend von dem ersten Ende 22 der Welle 21 in Richtung L erstreckt.

Weiter steht das Kugelelement 24 mit der ersten Lagerrolle 5 in Kontakt, um Kräfte, welche aufgrund von Bewegungen in Richtung L auftreten, entsprechend federn zu können und aufnehmen zu können. Analog zu der Ausgestaltung des Federelements 23 der Figur 1 steht auch das Federelement 23 der Figur 2 lediglich mit der inneren Stirnfläche 50 der ersten Laufrolle 5 in Kontakt, sodass auch hier die Reibungskräfte reduziert werden können.

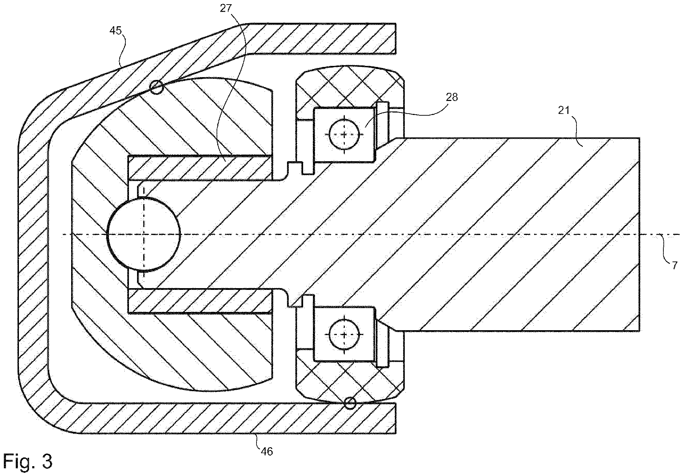

Der Figur 3 ist eine weitere bevorzugte Ausführungsform der vorliegenden Erfindung zu entnehmen. Insbesondere sind die Schenkel 45, 46 in Richtung L gesehen in etwa gleich lang ausgebildet, wobei der Schenkel 45 derart geformt ist, um nicht in Kontakt mit der zweiten Laufrolle 6 zu stehen. Der erste flächige Bereich 3 umfasst hierbei einen ersten ebenen Abschnitt 19, welcher erfindungsgemäß mit dem ersten Oberflächenabrollbereich 10 in Kontakt steht. Weiter ist eine alternative Lagerung der Laufrollen 5, 6 zu erkennen, welche für jede beliebige Ausführungsform denkbar ist. Die Lagerung der ersten Laufrolle 5 beziehungsweise der zweiten Laufrolle 6 umfasst zumindest eines ausgewählt aus einer Gruppe umfassend ein Nadellager, ein Kugellager, oder eine Kombination daraus. Gemäß der vorliegenden Figur 3 ist die erste Laufrolle 5 über ein Nadellager 27 gelagert, wohingegen die zweite Laufrolle 6 über ein Kugellager 28 gegenüber der Welle 21 gelagert ist.

Darüber hinaus ist zu erkennen, dass die erste Laufrolle 5 und die zweite Laufrolle 6 keine Kontaktfläche ausbilden, das heißt, die Laufrollen 5, 6 sind voneinander in Richtung L gesehen beabstandet.

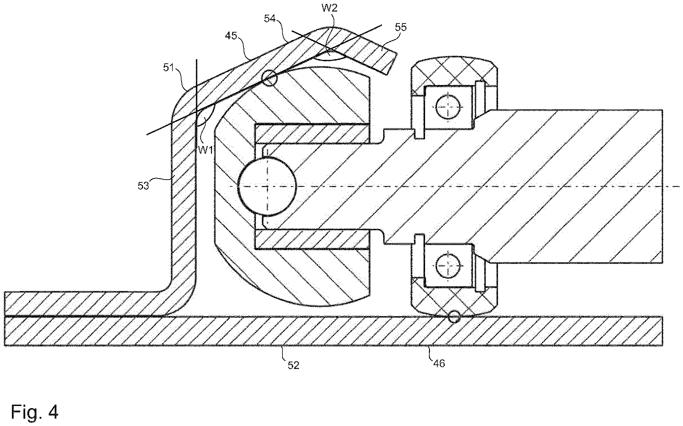

Die Ausführungsform gemäß Figur 4 ist ähnlich zu der Ausführungsform gemäß Figur 3, jedoch ist die Führungsschiene 2 anders ausgebildet. Die prinzipielle U-Form der Führungsschiene 2 ändert sich nicht, jedoch ändert sich die Konstruktion bzw. die Form der jeweiligen Schenkel 45, 46. Die Führungsschiene 2 besteht vorliegend aus einem ersten Führungsschienenteil 51, welche den ersten Schenkel 45 ausgestaltet, und einem zweiten Führungsschienenteil 52, welches den zweiten Schenkel 46 ausgestaltet. Weiter sind das erste Führungsschienenteil 51 und das zweite Führungsschienenteil 52 miteinander verbunden und bilden insgesamt die Führungsschiene 2. Das zweite Führungsschienenteil 52 ist vorzugsweise eben ausgestaltet, wohingegen das erste Führungsschienenteil 51 eine andere Form aufweist.

Vorliegend lässt sich das erste Führungsschienenteil 51 in einen ersten Führungsschienenteilabschnitt 53, einen zweiten Führungsschienenteilabschnitt 54 und einen dritten Führungsschienenteilabschnitt 55 unterteilen, wobei der erste Führungsschienenteilabschnitt 53 senkrecht zu dem zweiten Führungsschienenteil 52 ausgebildet ist. Weiter vorzugsweise ist der zweite Führungsschienenteilabschnitt 54 in einem stumpfen Winkel W1 gegenüber dem ersten Führungsschienenteilabschnitt 53 angeordnet und der dritte Führungsschienenteilabschnitt 55 in einem stumpfen Winkel W2 gegenüber dem zweiten Führungsschienenteilabschnitt 54.

Eine derartige Ausgestaltung der Führungsschiene 2 erhöht insbesondere die Zugfestigkeit der Rollenführung 1.

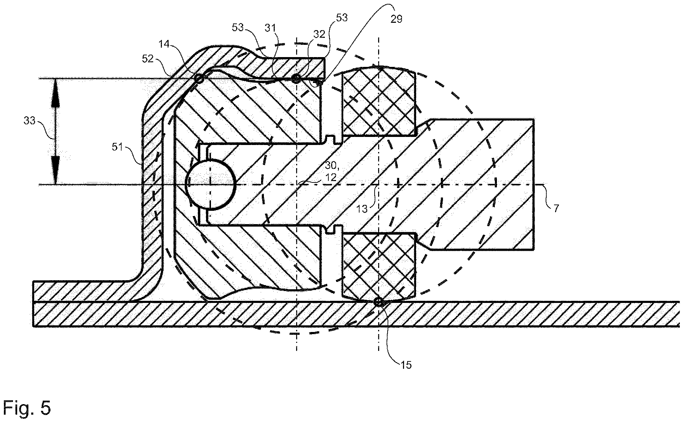

Gemäß der weiteren Figur 5 ist eine besonders bevorzugte Ausführungsform zu erkennen, wobei die erste Laufrolle 5 einen dritten kreissegmentförmigen Oberflächenabrollbereich 29 mit einem dritten Mittelpunkt 30 aufweist, wobei der dritte Oberflächenabrollbereich 29 mit einem dritten flächigen Bereich 31 der Führungsschiene 2 über einen dritten Kontaktpunkt 32 in Kontakt steht.

Es ist hierbei der erste flächige Bereich 3 als auch der dritte flächige Bereich 31 jeweils derart ausgestaltet, dass ein ebener Abschnitt vorgesehen ist. Es ist aber auch denkbar, dass der erste und dritte flächige Bereich 3, 31 kreissegmentförmig ausgebildet sind. Es ist aber auch denkbar, dass der erste flächige Bereich bzw. der dritte flächige Bereich eines umfasst ausgewählt aus einem kreissegmentförmigen Abschnitt oder einem ebenen Abschnitt.

Der erste kreissegmentförmige Oberflächenabrollbereich 10 und der dritte kreissegmentförmige Oberflächenabrollbereich 29 weisen den gleichen Mittelpunkt auf, haben jedoch verschiedene Radien. Die Kreisbögen der Oberflächenabrollbereiche 10, 29 sind daher Teile von konzentrischen Kreisen. Insbesondere weisen der erste Kontaktpunkt 14 und der dritte Kontaktpunkt 32 den gleichen radialen Abstand zu der Drehachse 7 auf. Die zu den kreissegmentförmigen Oberflächenabrollbereichen zugehörige ganze Kreis ist durch gestrichelte Linien angedeutet.

Die Ausgestaltung der Führungsschiene 2 ist ähnlich zu der Ausgestaltung gemäß Figur 4, wohingegen der dritte Führungsschienenteilabschnitt 55 senkrecht zu dem ersten Führungsschienenteilabschnitt 53 erstreckt, also in Richtung L der Drehachse 7.

Eine derartige Ausgestaltung wie in der Figur 5 gezeigt hat folgende weitere Vorteile. Der erste Kontaktpunkt 14 übernimmt Kräfte in Richtung L und der dritte Kontaktpunkt 30 übernimmt Kräfte in Richtung H, wohingegen der zweite Kontaktpunkt 15 weiter für die Verhinderung einer Klemmung der ersten Laufrolle 5 zuständig ist und Kräfte in Richtung H bei Lastwechseln oder dergleichen übernimmt.

Durch die Ausbildung von drei Kontaktpunkten 14, 15, 30 wird eine weitere Entlastung der Laufrollen, insbesondere der ersten Laufrolle 5, in Richtung H erreicht. Dadurch, dass der erste Kontaktpunkt 14 und der dritte Kontaktpunkt 30 den gleichen radialen Abstand zu der Drehachse 7 aufweisen, haben diese auch die gleiche lineare Geschwindigkeit, was in einer schlupffreien Rollbewegung der ersten Laufrolle 5 resultiert.

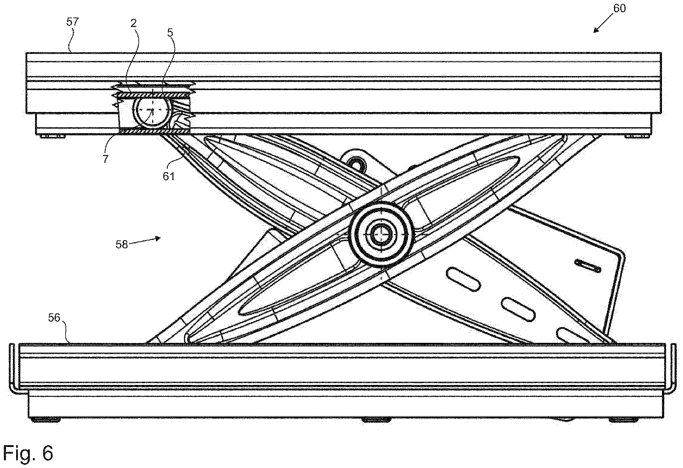

Figur 6 zeigt ein mögliches Einsatzgebiet der Rollenführung gemäß der vorliegenden Erfindung. Gezeigt ist gemäß Figur 6 ein Sitzunterbau 60 umfassend ein Sitzunterteil 56 und ein Sitzoberteil 57, welche durch ein Scherengestell 58 derart miteinander verbunden sind, so dass eine Relativbewegung des Sitzoberteils 57 zu dem Sitzunterteil 56 möglich ist.

Eine Rollenführung 1 ist, wie der Figur 6 zu entnehmen, beispielsweise einerseits mit dem Sitzoberteil 57 als auch mit einem Scherenarm 61 des Scherengestells 58 verbunden. Das Sitzunterteil 56 weist ebenso eine Rollenführung 1 auf, ist hierbei jedoch nicht genauer dargestellt. Insbesondere ist die Welle 21 mit dem Scherenarm 61 verbunden. Durch diese Ausgestaltung wird eine Relativbewegung des Sitzoberteils 57 gegenüber dem Sitzunterteil 56 ermöglich.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Rollenführung
- 2: Führungsschiene
- 3: erster flächiger Bereich
- 4: zweiter flächiger Bereich
- 5: erste Laufrolle
- 6: zweite Laufrolle
- 7: Drehachse
- 8: Abstand der ersten Laufrolle
- 9: Abstand der zweiten Laufrolle
- 10: erster kreissegmentförmiger Oberflächenabrollbereich
- 11: zweiter kreissegmentförmiger Oberflächenabrollbereich
- 12: Mittelpunkt des ersten Oberflächenabrollbereichs
- 13: Mittelpunkt des zweiten Oberflächenabrollbereichs
- 14: erster Kontaktpunkt
- 15: zweiter Kontaktpunkt
- 16: erster kreissegmentförmiger Abschnitt
- 17: Radius
- 18: erster Radius des ersten Oberflächenabrollbereichs
- 19: erster ebener Abschnitt
- 20: zweiter ebener Abschnitt
- 21: Welle
- 22: erstes Ende
- 23: Federelement
- 24: Kugelelement
- 25: Druckfeder
- 26: Lagerung
- 27: Nadellager
- 28: Kugellager
- 29: dritter kreissegmentförmiger Oberflächenabrollbereich
- 30: dritter Mittelpunkt
- 31: dritter flächiger Bereich
- 32: dritter Kontaktpunkt
- 33: radialer Abstand
- 34: Freiraum
- 35: Kontaktfläche
- 36: Entlastungsbereich
- 37: Ausdehnung
- 38: Übergangsbereich
- 39: vorderer Bereich
- 40: hinterer Bereich
- 41: vorderer Abstand
- 42: hinterer Abstand
- 43: Längsabstand
- 44: Längserstreckung
- 45: erster Schenkel
- 46: zweiter Schenkel
- 47: Kugelhalterung
- 48: Ausnehmung
- 49: Bohrung
- 50: innere Stirnfläche
- 51: erstes Führungsschienenteil
- 52: zweites Führungsschienenteil
- 53: erster Führungsschienenteilabschnitt
- 54: zweiter Führungsschienenteilabschnitt
- 55: dritter Führungsschienenteilabschnitt
- 56: Sitzunterteil
- 57: Sitzoberteil
- 58: Scherengestell
- 60: Sitzunterbau
- 61: Scherenarm
- W1: Winkel
- W2: Winkel
- L: Erstreckungsrichtung
- R: radiale Richtung
- H: Höhenrichtung

## Patentansprüche

1. Rollenführung (1) mit zumindest einer Führungsschiene (2), welche zumindest einen ersten (3) und einen zweiten flächigen Bereich (4) aufweist, und mit einer ersten (5) und einer zweiten Laufrolle (6), welche jeweils mit der Führungsschiene (2) in Kontakt stehen und daran abrollen, wobei die erste (5) und die zweite Laufrolle (6) um eine gemeinsame Drehachse (7) drehbar gelagert und um die Drehachse (7) rotationssymmetrisch ausgebildet sind und ein Abstand (8) der ersten Laufrolle (5) zur Drehachse (7) kleiner ist als ein Abstand (9) der zweiten Laufrolle (6) zur Drehachse (7),
**dadurch gekennzeichnet, dass**
die erste Laufrolle (5) einen ersten kreissegmentförmigen Oberflächenabrollbereich (10) aufweist und die zweite Laufrolle (6) einen zweiten kreissegmentförmigen Oberflächenabrollbereich (11) aufweist und ein Mittelpunkt (12) des ersten Oberflächenabrollbereichs (10) und ein Mittelpunkt (13) des zweiten Oberflächenabrollbereichs (11) auf der Drehachse (7) angeordnet sind.

2. Rollenführung (1) nach Anspruch 1,
**dadurch gekennzeichnet, dass**
die erste Laufrolle (5) mittels des ersten kreisförmigen Oberflächenabrollbereichs (10) mit dem ersten flächigen Bereich (3) über einen ersten Kontaktpunkt (14) und die zweite Laufrolle (6) mittels des zweiten kreisförmigen Oberflächenabrollbereichs (11) mit dem zweiten flächigen Bereich (4) über einen zweiten Kontaktpunkt (15) in Kontakt steht.

3. Rollenführung (1) nach Anspruch 1 oder 2,
**dadurch gekennzeichnet, dass**
der erste kreissegmentförmige Oberflächenabrollbereich (10) und der zweite kreissegmentförmige Oberflächenabrollbereich (11) in einer gemeinsamen Ebene angeordnet sind, welche die Drehachse (7) umfasst.

4. Rollenführung (1) nach einem der Ansprüche 1-3,
**dadurch gekennzeichnet, dass**
der erste flächige Bereich (3) einen ersten kreissegmentförmigen Abschnitt (16) aufweist mit einem Radius, welcher größer ist als ein erster Radius (18) des ersten kreissegmentförmigen Oberflächenabrollbereichs (10), oder der erste flächige Bereich (3) einen ersten ebenen Abschnitt (19) aufweist.

5. Rollenführung nach einem der Ansprüche 1-4,
**dadurch gekennzeichnet, dass**
der zweite flächige Bereich (4) einen zweiten ebenen Abschnitt (20) aufweist.

6. Rollenführung (1) nach einem der Ansprüche 1-5,
**dadurch gekennzeichnet, dass**
die Rollenführung (1) eine um die Drehachse (7) drehbare Welle (21) aufweist, auf welcher die erste Laufrolle (5) und die zweite Laufrolle (6) angeordnet sind, wobei die Welle (21) an einem ersten Ende (22) zumindest ein vorgespanntes Federelement (23) aufweist, wobei das Federelement (23) mit der ersten Laufrolle (5) zumindest in Wirkkontakt steht.

7. Rollenführung (1) nach Anspruch 6,
**dadurch gekennzeichnet, dass**
das vorgespannte Federelement (23) zumindest teilweise aus einem Elastomer, vorzugsweise Cellasto, besteht.

8. Rollenführung (1) nach Anspruch 6,
**dadurch gekennzeichnet, dass**
das vorgespannte Federelement (23) ein Kugelelement (24) und eine vorgespannte Druckfeder (25) aufweist, wobei das Kugelelement (24) mittels der Druckfeder (25) vorgespannt ist.

9. Rollenführung nach einem der vorangegangen Ansprüche,
**dadurch gekennzeichnet, dass**
eine Lagerung der ersten Laufrolle (5) und eine Lagerung der zweiten Laufrolle (6) jeweils eines umfasst ausgewählt aus einer Gruppe umfassend ein Nadellager (27), ein Kugellager (28) oder einer Kombination daraus.

10. Rollenführung (1) nach einem der vorangegangenen Ansprüche,
**dadurch gekennzeichnet, dass**
die erste Laufrolle (5) einen dritten kreissegmentförmigen Oberflächenabrollbereich (29) mit einem dritten Mittelpunkt (30) aufweist, welcher auf der Drehachse (7) angeordnet ist, wobei die erste Laufrolle (5) zusätzlich mittels des dritten kreissegmentförmigen Oberflächenabrollbereichs (29) mit einem dritten flächigen Bereich (31) der Führungsschiene (2) über einen dritten Kontaktpunkt (32) in Kontakt steht.

11. Rollenführung (2) nach Anspruch 10,
**dadurch gekennzeichnet, dass**
der erste Kontaktpunkt (14) und der dritte Kontaktpunkt (32) einen gleichen radialen Abstand (33) zu der Drehachse (7) aufweisen.

12. Rollenführung (1) nach einem der Ansprüche 1-9,
**dadurch gekennzeichnet, dass**
die erste Laufrolle (5) ausschließlich mittels des ersten Kontaktpunkts (14) mit dem ersten flächigen Bereich (3) und die zweite Laufrolle (6) ausschließlich mittels des zweiten Kontaktpunkts (15) mit dem zweiten flächigen Bereich (4) in Kontakt stehen.

13. Rollenführung (1) nach Anspruch 10 oder 11,
**dadurch gekennzeichnet, dass**
die erste Laufrolle (5) ausschließlich mit dem ersten flächigen Bereich (3) und dem dritten flächigen Bereich (31) und die zweite Laufrolle (6) ausschließlich mit dem zweiten flächigen Bereich (4) in Kontakt stehen.

14. Fahrzeugsitz, umfassend eine Rollenführung (1) nach einem der vorangegangenen Ansprüche 1-13.

## Claims

1. Roller guide (1) comprising at least one guide rail (2), which has at least one first (3) and one second planar region (4), and comprising a first (5) and a second roller (6), which are each in contact with the guide rail (2) and roll thereon, wherein the first (5) and the second roller (6) are mounted so that they are rotatable about a common axis of rotation (7) and are formed rotationally-symmetrically about the axis of rotation (7) and a distance (8) of the first roller (5) to the axis of rotation (7) is less than a distance (9) of the second roller (6) to the axis of rotation (7),
**characterised in that**
the first roller (5) has a first circular-segment-shaped surface rolling region (10) and the second roller (6) has a second circular-segment-shaped surface rolling region (11) and a centre point (12) of the first surface rolling region (10) and a centre point (13) of the second surface rolling region (11) are arranged on the axis of rotation (7).

2. Roller guide (1) according to claim 1,
**characterised in that**
the first roller (5) is in contact by means of the first circular surface rolling region (10) with the first planar region (3) via a first contact point (14) and the second roller (6) is in contact by means of the second circular surface rolling region (11) with the second planar region (4) via a second contact point (15).

3. Roller guide (1) according to either claim 1 or claim 2,
**characterised in that**
the first circular-segment-shaped surface rolling region (10) and the second circular-segment-shaped surface rolling region (11) are arranged in a common plane which comprises the axis of rotation (7).

4. Roller guide (1) according to any of claims 1 to 3,
**characterised in that**
the first planar region (3) has a first circular-segment-shaped portion (16) having a radius which is larger than a first radius (18) of the first circular-segment-shaped surface rolling region (10), or the first planar region (3) has a first level portion (19).

5. Roller guide according to any of claims 1 to 4,
**characterised in that**
the second planar region (4) has a second level portion (20).

6. Roller guide (1) according to any of claims 1 to 5,
**characterised in that**
the roller guide (1) has a shaft (21) rotatable about the axis of rotation (7), on which the first roller (5) and the second roller (6) are arranged, wherein the shaft (21) has at least one pre-tensioned spring element (23) at a first end (22) and wherein the spring element (23) is at least in operational contact with the first roller (5).

7. Roller guide (1) according to claim 6,
**characterised in that**
the pre-tensioned spring element (23) consists at least in part of an elastomer, preferably Cellasto.

8. Roller guide (1) according to claim 6,
**characterised in that**
the pre-tensioned spring element (23) has a ball element (24) and a pre-tensioned compression spring (25), wherein the ball element (24) is pre-tensioned by means of the compression spring (25).

9. Roller guide according to any of the preceding claims,
**characterised in that**
the bearings of the first roller (5) and the bearings of the second roller (6) each comprise one selected from a group comprising a needle bearing (27), a ball bearing (28), or a combination thereof.

10. Roller guide (1) according to any of the preceding claims,
**characterised in that**
the first roller (5) has a third circular-segment-shaped surface rolling region (29) having a third centre point (30), which is arranged on the axis of rotation (7), wherein the first roller (5) is additionally in contact by means of the third circular-segment-shaped surface rolling region (29) with a third planar region (31) of the guide rail (2) via a third contact point (32).

11. Roller guide (2) according to claim 10,
**characterised in that**
the first contact point (14) and the third contact point (32) have the same radial distance (33) to the axis of rotation (7).

12. Roller guide (1) according to any of claims 1 to 9,
**characterised in that**
the first roller (5) is exclusively in contact by means of the first contact point (14) with the first planar region (3) and the second roller (6) is exclusively in contact by means of the second contact point (15) with the second planar region (4).

13. Roller guide (1) according to either claim 10 or claim 11,
**characterised in that**
the first roller (5) is exclusively in contact with the first planar region (3) and the third planar region (31) and the second roller (6) is exclusively in contact with the second planar region (4).

14. Vehicle seat, comprising a roller guide (1) according to any of the preceding claims 1 to 13.

## Revendications

1. Guidage à galets (1) comportant au moins un rail de guidage (2), lequel présente au moins une première (3) et une deuxième région plate (4), et comportant un premier (5) et un second galet (6), lesquels sont chacun en contact avec le rail de guidage (2) et roulent sur celui-ci, dans lequel le premier (5) et le second galet (6) sont montés à rotation autour d'un axe de rotation commun (7) et sont réalisés à symétrie de rotation autour de l'axe de rotation (7) et une distance (8) du premier galet (5) à l'axe de rotation (7) est plus petite qu'une distance (9) du second galet (6) à l'axe de rotation (7),
**caractérisé par le fait que**
le premier galet (5) présente une première région de roulement de surface en forme de secteur circulaire (10) et le second galet (6) présente une deuxième région de roulement de surface en forme de secteur circulaire (11) et un point central (12) de la première région de roulement de surface (10) et un point central (13) de la deuxième région de roulement de surface (11) sont disposés sur l'axe de rotation (7).

2. Guidage à galets (1) selon la revendication 1,
**caractérisé par le fait que**
le premier galet (5) est en contact avec la première région plate (3) par un premier point de contact (14) au moyen de la première région de roulement de surface en forme de secteur circulaire (10) et le second galet (6) est en contact avec la deuxième région plate (4) par un second point de contact (15) au moyen de la deuxième région de roulement de surface en forme de secteur circulaire (11).

3. Guidage à galets (1) selon l'une des revendications 1 et 2,
**caractérisé par le fait que**
la première région de roulement de surface en forme de secteur circulaire (10) et la deuxième région de roulement de surface en forme de secteur circulaire (11) sont disposées dans un plan commun, lequel comporte l'axe de rotation (7).

4. Guidage à galets (1) selon l'une des revendications 1 à 3,
**caractérisé par le fait que**
la première région plate (3) présente une première section en forme de secteur circulaire (16) ayant un rayon qui est plus grand qu'un premier rayon (18) de la première région de roulement de surface en forme de secteur circulaire (10) ou la première région plate (3) présente une première section plane (19).

5. Guidage à galets (1) selon l'une des revendications 1 à 4,
**caractérisé par le fait que**
la deuxième région plate (4) présente une seconde section plane (20).

6. Guidage à galets (1) selon l'une des revendications 1 à 5,
**caractérisé par le fait que**
le guidage à galets (1) présente un arbre (21) apte à tourner autour de l'axe de rotation (7), sur lequel le premier galet (5) et le second galet (6) sont disposés, l'arbre (21) présentant au moins un élément ressort précontraint (23) à une première extrémité (22), l'élément ressort (23) étant au moins en contact fonctionnel avec le premier galet (5).

7. Guidage à galets (1) selon la revendication 6,
**caractérisé par le fait que**
l'élément ressort précontraint (23) est constitué au moins en partie d'un élastomère, de préférence de Cellasto.

8. Guidage à galets (1) selon la revendication 6,
**caractérisé par le fait que**
l'élément ressort précontraint (23) présente un élément à bille (24) et un ressort de compression précontraint (25), l'élément à bille (24) étant précontraint au moyen du ressort de compression (25).

9. Guidage à galets (1) selon l'une des revendications précédentes,
**caractérisé par le fait que**
un palier du premier galet (5) et un palier du second galet (6) comportent chacun l'un choisi dans un groupe comportant un roulement à aiguilles (27), un roulement à billes (28) ou une combinaison de ceux-ci.

10. Guidage à galets (1) selon l'une des revendications précédentes,
**caractérisé par le fait que**
le premier galet (5) présente une troisième région de roulement de surface en forme de secteur circulaire (29) comprenant un troisième point central (30), lequel est disposé sur l'axe de rotation (7), le premier galet (5) étant de façon additionnelle en contact avec une troisième région plate (31) du rail de guidage (21) par un troisième point de contact (32) au moyen de la troisième région de roulement de surface en forme de secteur circulaire (29).

11. Guidage à galets (1) selon la revendication 10,
**caractérisé par le fait que**
le premier point de contact (14) et le troisième point de contact (32) présentent une même distance radiale (103) à l'axe de rotation (7).

12. Guidage à galets (1) selon l'une des revendications 1 à 9,
**caractérisé par le fait que**
le premier galet (5) est exclusivement en contact avec la première région plate (3) au moyen du premier point de contact (14) et le second galet (6) est exclusivement en contact avec la deuxième région plate (4) au moyen du deuxième point de contact (15).

13. Guidage à galets (1) selon l'une des revendications 10 et 11,
**caractérisé par le fait que**
le premier galet (5) est exclusivement en contact avec la première région plate (3) et la troisième région plate (31) et le second galet (6) est exclusivement en contact avec la deuxième région plate (4).

14. Siège de véhicule, comportant un guidage à galets (1) selon l'une des revendications précédentes 1 à 13.
